# EUROPEAN PATENT APPLICATION

(11) **EP 4 216 385 A1**
(43) Date of publication of application: **26.07.2023**
(21) Application number: 23152346.5
(22) Date of filing: 19.01.2023
(51) Int. Cl.: H02G 9/02

(54) **UNDERGROUND POWER CABLE SYSTEM FOR LIGHTNING STRIKE PROTECTION**

(30) Priority: 20.01.2022 US 202217648489
(71) Applicant: NKT HV Cables AB, 371 60 Lyckeby (SE)
(72) Inventor: THYRVIN, Ola, Karlskrona (SE); WORZYK, Thomas, Lyckeby (SE); HOBSON, Robert Wayne, Cary (US)
(74) Representative: Kransell & Wennborg KB

(57) **Abstract**

An underground power cable system (23-2) comprising: an underground power cable (1), and a metallic mesh (17) extending outside of and axially along the underground power cable (1).

## Description

### TECHNICAL FIELD

The present disclosure generally relates to underground power cables.

### BACKGROUND

Today most of the underground power cable routes are in the range of 10 km length or below. Therefore, the likelihood of a lightning strike close to the cable route is small, especially in temperate climate zones where the number of thunderstorms is limited. In addition, many underground high-voltage cables are installed in urban areas where buildings can act as shielding structures against lightning strikes.

The industry sees the planning and implementation of very large underground cable interconnectors where the route length may reach several hundreds of km. The interconnections will often also require routing through rural areas and green fields where lightning strikes are not distracted by large buildings. The number of expected lightning strikes close to the cable route will therefore become substantially larger.

A lightning strike into ground close to the power cable can result in multiple cable sheath punctures but does not necessarily cause a total breakdown of the main insulation. The cable may remain in service and the damage may go undetected for weeks, months or even years. However, the ingress of water may deteriorate the main insulation and cause a full breakdown later.

### SUMMARY

A general object of the present disclosure is to provide an underground power cable system that solves or at least mitigates the problems of the prior art.

There is hence according to a first aspect of the present disclosure provided an underground power cable system comprising: an underground power cable, and a metallic mesh arranged outside the underground power cable and extending axially along the underground power cable.

The metallic mesh acts as a lightning conductor structure but with remarkably higher efficiency than one or two guard wires extending parallel with an underground power cable. The risk of punctuating the outer sheath of the underground power cable, and any internal water blocking layer, and as a result exposing the insulation system to moisture and water penetration due to partial discharge caused by lightning strikes, may thus be reduced substantially.

The risk corridor is the width to the sides of a buried underground power cable at the ground surface within which any lightning strike risks damaging the underground power cable. Although the burial depth has some influence on this risk, it is generally negligible in practical applications.

With no lightning protection at all, it has been calculated that an underground power cable at a burial depth of 1.5 m in soil with an electrical resistivity of 500 Ω^{∗}m has a probability of being subjected to 2.4 damages per 100 km cable route and year.

Using two copper wires of 17 mm² cross section as guard wires arranged in parallel with an underground power cable, under the conditions mentioned above, provided a probability of 0.8671 damages per 100 km cable route and year with the ground resistivity at 500 Ω^{∗}m. A metallic mesh covering one side of the underground power cable provided a probability of 0.4735 damages per 100 km cable route and year, and a metallic mesh covering three sides of the underground power cable lowered the probability to 0.0046, which is about 200 times lower than the case with the two copper rods, and more than 500 times lower than without any protection.

Further probabilities for different electrical ground resistivities and different lightning protection structures are presented in table 1 below.

**Table 1**

| Ground resistivity (Ω^{∗}m) | No protection | 2 guard wire 17 mm² copper weld | Metallic mesh on top of the power cable | Metallic mesh on three sides | Metallic mesh on four sides |
|---|---|---|---|---|---|
| 10 | 0 | 0 | 0 | 0 | 0 |
| 50 | 0.123 | 0.0115 | 0 | 0 | 0 |
| 100 | 0.411 | 0.0781 | 0.0151 | 0 | 0 |
| 500 | 2.385 | 0.8671 | 0.4735 | 0.0046 | 0 |
| 1000 | 4.750 | 1.6013 | 0.9861 | 0.0539 | 0.0005 |

With "sides" in the context of a power cable with circular cross section is meant that the mesh is arranged as a "fence" having sections at right or essentially right angles to cover the underground power cable. Thus, for example, when the metallic mesh is arranged on three sides of the underground power cable, it is laid as three sides of a rectangle around the underground power cable.

The risk of cable damage increases with higher electrical resistivity of the soil. Thus, the amount of covering of the external surface of the underground power cable with the metallic mesh will be dependent on the soil in which the underground power cable is laid. The larger the coverage by the metallic mesh is, the smaller the risk of damages due to lightning strikes. For example, the best protection is given when the entire external surface is surrounded by the metallic mesh, which thus forms a Faraday cage around the underground power cable.

The metallic mesh extends along at least a portion of the perimeter of the external surface of the underground power cable.

The metallic mesh may be arranged on top of the underground power cable, and/or laterally of one or more sides of the underground power cable in an installed state of the underground power cable.

In cross section of the underground power cable system along the longitudinal axis of the underground power cable, the metallic mesh may be wider than the diameter of the underground power cable.

In cross section of the underground power cable system along the longitudinal axis of the underground power cable, the metallic mesh may be arranged to extend beyond the underground power cable on opposite sides of the underground power cable to shield the underground power cable from lightning strike currents propagating in a hemispherical or somewhat hemispherical manner from the point of impact.

The metallic mesh may be arranged along a majority of the length of the underground power cable, for example the entire length of the underground power cable.

The metallic mesh may form a fence around at least a portion of the external surface of the underground power cable.

The metallic mesh may be floating or grounded.

The metallic mesh may have a rectangular mesh shape. According to some examples, the metallic mesh may have a polygonal, circular, or elliptical, mesh shape.

At any point of the underground power cable, the metallic mesh may be composed of one or more metallic mesh subunits. Each metallic mesh subunit may for example have been rolled up before it was arranged to extend along the underground power cable.

According to one embodiment the metallic mesh is spaced apart from the underground power cable.

The spacing is a radial spacing and may for example be in the order of centimetres or decimetres.

The spacing may for example be less than 2 m, for example less than 1.5 m, for example less than 1 m, such as not more than 0.5 m.

According to one embodiment the metallic mesh extends around a majority of the perimeter external surface of the underground power cable.

According to one embodiment the metallic mesh extends around a minority of the perimeter of the external surface of the underground power cable.

According to one embodiment the metallic mesh extends around the entire perimeter of the external surface of the underground power cable.

According to one embodiment the metallic mesh is made of galvanized steel or stainless steel. The metallic mesh could alternatively be made of another metal, such as copper, a copper alloy, or aluminium.

According to one embodiment the metallic mesh comprises metal wires that are welded together.

According to one embodiment the metallic mesh has a mesh size of at least 1 cm². The mesh size may for example be at least 2 cm², at least 3 cm², or at least 4 cm².

According to one embodiment the metallic mesh is arranged on top of the underground power cable.

If it is assumed that the lightning strike current propagates in a hemispherical or at least somewhat hemispherical manner in soil, a metallic mesh provided on top of the underground power cable will provide shielding of the underground power cable from the lightning strike current.

According to one embodiment the metallic mesh is arranged laterally of the underground power cable along at least one side of the underground power cable. The metallic mesh may for example be arranged vertically or at least partly vertically laterally of the underground power cable.

A metallic mesh provided laterally of the underground power cable will provide shielding of the underground power cable from the lightning strike current if it is assumed that the lightning strike current propagates in a hemispherical or at least somewhat hemispherical manner in soil.

According to one embodiment the underground power cable comprises: a conductor, an insulation system arranged around the conductor, the insulation system comprising an inner semiconducting layer, an insulation layer surrounding the inner semiconducting layer, and an outer semiconducting layer surrounding the insulation layer, a metallic screen arranged around the insulation system, a water barrier layer arranged around the metallic screen, and an outer sheath defining the external surface.

The metallic screen may be connected to electric ground.

The metallic screen may for example comprise copper wires.

According to one embodiment the underground power cable is a DC power cable.

The underground power cable could alternatively be an AC power cable.

According to one embodiment the underground power cable is a first underground power cable, and the underground power cable system comprises a second underground power cable arranged generally parallel with the first underground power cable, wherein the metallic mesh extends along the second underground power cable.

There is according to a second aspect provided a method of installing an underground power cable system, comprising: a) laying the underground power cable in a trench, and b) arranging a metallic mesh to extend outside of and along the underground power cable in the trench.

One embodiment comprises placing backfill material over the underground power cable after step a), prior to step b), and placing further backfill material over the metallic mesh after step b).

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 shows a cross section of an example of an underground power cable;
Fig. 2 schematically shows a front view of a metallic mesh;
Figs 3A-3C show cross-sections of various examples of underground power cable systems installed in soil; and
Fig. 4 is a method of installing an underground power cable system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

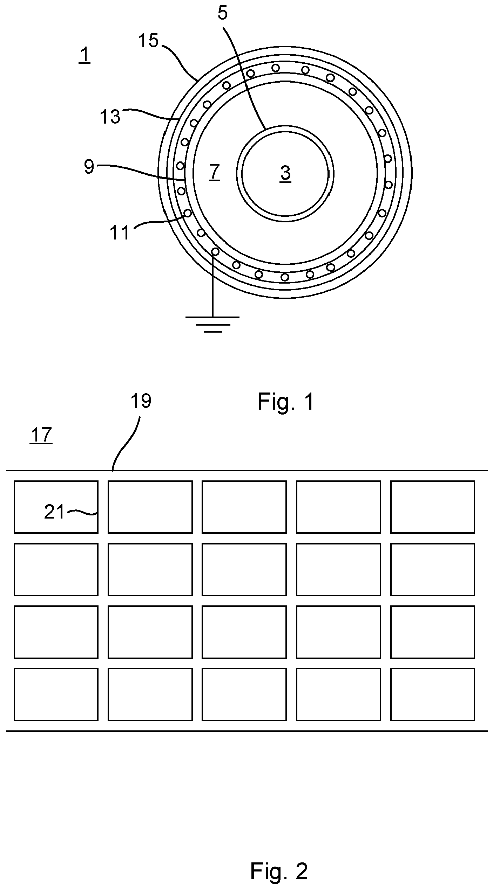

Fig. 1 shows an example of an underground power cable 1. The exemplified underground power cable 1 may be a DC power cable or a single-phase AC power cable. Alternatively, the underground power cable could comprise more than one pole or phase.

The underground power cable 1 may be a medium voltage power cable, a high voltage power cable, an extra high voltage power cable, or an ultra-high voltage power cable.

The underground power cable 1 comprises a conductor 3.

The underground power cable 1 comprises an electrical insulation system. The electrical insulation system comprises an inner semiconducting layer, or conductor screen, 5. The inner semiconducting layer 5 is arranged around the conductor 3.

The inner semiconducting layer 5 may for example comprise polymer mixed with conductive particles, or conductive paper.

The electrical insulation system comprises an insulation layer 7. The insulation layer 7 is arranged around the inner semiconducting layer 5. The insulation layer may comprise a polymer material, such as crosslinked polyethylene, polypropylene, EPR or EPDM rubber, or paper. The insulation layer 7 may be an extruded insulation layer or a wound insulation layer.

The electrical insulation system comprises an outer semiconducting layer 9, or insulation layer screen, 9. The outer semiconducting layer 9 is arranged around the insulation layer 7.

The outer semiconducting layer 9 may for example comprise polymer mixed with conductive particles, or conductive paper.

The underground power cable 1 comprises a metallic screen 11 arranged radially outside the outer semiconducting layer 9.

The metallic screen 11 may for example comprise a plurality of copper wires. The metallic screen 11 may be connected to electric ground.

The underground power cable 1 may comprise an inner water swellable tape arranged radially inside of the metallic screen 11 and an outer water swellable tape arranged radially outside of the metallic screen 11.

The underground power cable 1 may comprise a water barrier layer 13. The water barrier layer 13 is arranged around the metallic screen 11.

The water barrier layer 13 may for example have a laminated structure.

The water barrier layer 13 may comprise metal. The water barrier layer 13 may for example comprise aluminium, copper, or stainless steel.

The underground power cable 1 comprises an outer sheath 15. The outer sheath 15 may comprise one or more polymeric layers, for example at least one HDPE layer. The outer sheath 15 may be an extruded sheath.

The outer sheath 15 defines the external surface of the underground power cable 1. The outer sheath 15 has an outer surface, which is the external surface of the underground power cable 1.

Fig. 2 shows a front view of a portion of a metallic mesh 17. The metallic mesh 17 may for example comprise metal wires 19, 21 which have been welded together to form a mesh structure.

The metallic mesh 17 may for example comprise steel, such as galvanized steel or stainless steel. For example, the metal wires 19, 21 may be galvanized steel wires or stainless-steel wires.

The mesh size may for example be at least 1 cm², such as at least 2 cm², such as at least 3 cm², at least 4 cm², such as at least 5 cm², at least 6 cm², such as at least 7 cm², at least 8 cm², such as at least 9 cm², at least 10 cm².

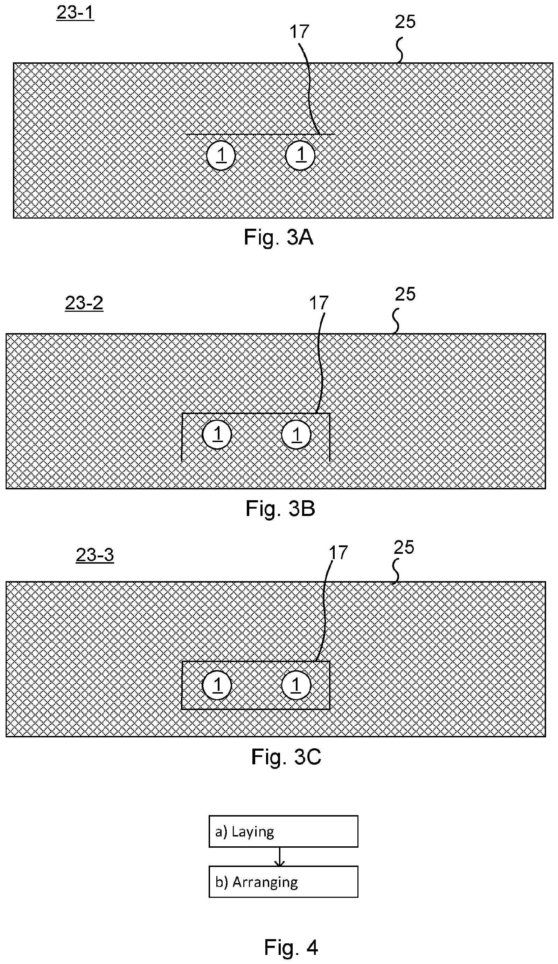

Fig. 3A shows an example of an underground power cable system 23-1. The exemplified underground power cable system 23-1 comprises two underground power cables such as underground power cable 1, and the metallic mesh 17.

It is to be understood that the metallic mesh 17 may be used with a single underground power cable, or more than two underground power cables, instead of two underground power cables as shown in Figs 3A-3C.

The underground power cables 1 extend in parallel or generally in parallel with each other along their length. The underground power cables 1 are buried in the ground or soil 25.

The underground power cables 1 may be buried at the same burial depth in a flat formation. In examples comprising more than two underground power cables, the underground power cables may be arranged at the same burial depth in a flat formation or in a trefoil formation, for example. This holds for all examples presented herein.

The burial depth may for example be in the range of 0.5-2 m, such as 1-2 m.

In a cross-section along the longitudinal axes of the underground power cables 1, the metallic mesh 17 extends along a portion of the external surface of each of the underground power cables 1. The metallic mesh 17 is typically arranged within 1.5 m, such as within 1 m, such as within 0.5 m, from the underground power cables 1.

In the example in Fig. 3A, the metallic mesh 17 is arranged axially aligned with and vertically above the underground power cables 1. The metallic mesh 17 is arranged horizontally and extends laterally beyond each of the two underground power cables 1.

The metallic mesh 17 is arranged spaced apart from the underground power cables 1. The metallic mesh 17 could alternatively be in direct contact with the external surface of one or both of the underground power cables 1.

Fig. 3B shows an example of an underground power cable system 23-2 comprising two underground power cables such as underground power cable 1 and the metallic mesh 17. In this example, the metallic mesh 17 has been laid to extend along three sides of the underground power cables 1. The metallic mesh 17 is provided on top of the underground power cables 1, laterally of one of the underground power cables 1 and laterally of the other one of the underground power cables 1.

Fig. 3C shows an example of an underground power cable system 23-3 comprising two underground power cables such as underground power cable 1 and the metallic mesh 17. In this example, the metallic mesh 17 has been laid to extend along four sides of the underground power cables 1. The metallic mesh 17 thus encloses the underground power cables 1. The metallic mesh 17 is provided on top of the underground power cables 1, laterally of one of the underground power cables 1, laterally of the other one of the underground power cables 1, and vertically below the underground power cables 1.

A method of installing an underground power cable system, such as the underground power cable system 23-1, 23-2 or 23-3 will now be described with reference to Fig. 4.

The underground power cable system 23-1, 23-2 or 23-3 is installed in an excavated trench.

In a step a) the underground power cable 1 is laid in the trench.

In case of several underground power cables 1, each one is laid in the trench. In case the underground power cables 1 are laid in a flat formation, they are typically arranged spaced apart from each other.

In a step b) the metallic mesh 17 is arranged outside of and along the underground power cable(s) 1 in the trench.

The metallic mesh 17 may be arranged on one or more rolls that is/are unwound and arranged along the axial direction of the underground power cable(s) 1. According to one example, several rolls may be used to arrange metallic mesh 17 along different sides of the underground power cable(s) 1.

For example, one roll may be used to arrange metallic mesh 17 laterally to one side of the underground power cable(s) 1 in the underground power cable system 23-2. Another roll may be used to arrange metallic mesh 17 laterally to another side of the underground power cable(s) 1. A third roll may be used to arrange metallic mesh 17 axially along the top of the underground power cable(s) 1.

Thus, the metallic mesh 17 arranged along the underground power cables 1 may at any point along the underground power cables 1 be formed of several metallic mesh subunits, each extending along a respective side of the underground power cables 1. Alternatively, the metallic mesh 17 may be formed of a single metallic mesh extending along the underground power cables 1.

In case the metallic mesh 17 is arranged to enclose the underground power cable(s) 1, the metallic mesh 17 is prior to step a) arranged underneath the underground power cable(s) 1. Backfill material/sand may be arranged over the metallic mesh 17 before the underground power cable(s) 1 are laid out in the trench.

Backfill material/sand may be placed over the underground power cable(s) 1 after step a), before step b). Further backfill material/sand may be placed on top of the metallic mesh 17 that has been placed on the lateral side(s) of the underground power cable(s) 1 and/or on top of the underground power cable(s) 1 to backfill the trench.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. An underground power cable system (23-1; 23-2; 23-3) comprising:
an underground power cable (1), and
a metallic mesh (17) arranged outside of and extending axially along the underground power cable (1).

2. The underground power cable system (23-1; 23-2; 23-3) as claimed in claim 1, wherein the metallic mesh (17) is spaced apart from the underground power cable (1).

3. The underground power cable system (23-2; 23-3) as claimed in claim 1 or 2, wherein the metallic mesh (17) extends around a majority of the perimeter of the external surface of the underground power cable (1).

4. The underground power cable system (23-3) as claimed in claim 1 or 2, wherein the metallic mesh (17) extends around the entire perimeter of the external surface of the underground power cable (1).

5. The underground power cable system (23-1; 23-2; 23-3) as claimed any of the preceding claims, wherein the metallic mesh (17) is made of galvanized steel or stainless steel.

6. The underground power cable system (23-1; 23-2; 23-3) as claimed in any of the preceding claims, wherein the metallic mesh (17) comprises metal wires (19, 21) that are welded together.

7. The underground power cable system (23-1; 23-2; 23-3) as claimed in any of the preceding claims, wherein the metallic mesh has a mesh size of at least 1 cm².

8. The underground power cable system (23-1; 23-2; 23-3) as claimed in any of the preceding claims, wherein the metallic mesh (17) is arranged on top of the underground power cable (1).

9. The underground power cable system (23-1; 23-2; 23-3) as claimed in any of the preceding claims, wherein the metallic mesh (17) is arranged laterally of the underground power cable (1) along at least one side of the underground power cable (1).

10. The underground power cable system (23-1; 23-2; 23-3) as claimed in any of the preceding claims, wherein the underground power cable (1) comprises:
a conductor (3),
an insulation system arranged around the conductor (3), the insulation system comprising an inner semiconducting layer (5), an insulation layer (7) surrounding the inner semiconducting layer (5), and an outer semiconducting layer (9) surrounding the insulation layer (7),
a metallic screen (11) arranged around the insulation system,
a water barrier layer (13) arranged around the metallic screen (11), and
an outer sheath (15) defining the external surface.

11. The underground power cable system (23-1; 23-2; 23-3) as claimed in any of the preceding claims, wherein the underground power cable (1) is a DC power cable.

12. The underground power cable system (23-1; 23-2; 23-3) as claimed in any of the preceding claims, wherein the underground power cable (1) is a first underground power cable, and the underground power cable system comprises a second underground power cable arranged generally parallel with the first underground power cable, wherein the metallic mesh (17) extends outside of and axially along the second underground power cable.

13. A method of installing an underground power cable system (23-1; 23-2; 23-3), comprising:
a) laying the underground power cable (1) in a trench, and
b) arranging a metallic mesh (17) to extend outside of and axially along the underground power cable (1) in the trench.

14. The method as claimed in claim 11, comprising placing backfill material over the underground power cable (1) after step a), prior to step b), and placing further backfill material over the metallic mesh after step b).
